(19) Europäisches Patentamt
European Patent Office
Office européen des brevets

(11) Publication number: **0 251 741 B1**

# (12) EUROPEAN PATENT SPECIFICATION

(45) Date of publication of patent specification: **21.08.91**

(51) Int. Cl.⁵: **C08L 79/08**, C08L 27/18, C08L 27/16, C08L 27/20, C08G 73/10

(21) Application number: **87305728.5**

(22) Date of filing: **26.06.87**

## (54) Polyimide resin composition.

(30) Priority: **30.06.86 JP 151742/86**

(43) Date of publication of application:
**07.01.88 Bulletin 88/01**

(45) Publication of the grant of the patent:
**21.08.91 Bulletin 91/34**

(84) Designated Contracting States:
**CH DE FR GB IT LI NL**

(56) References cited:
**EP-A- 0 120 130**
**EP-A- 0 186 155**
**US-A- 4 433 104**
**US-A- 4 599 383**

**PATENT ABSTRACTS OF JAPAN, vol. 9, no. 260 (C-309)[1983], 17th October 1985; & JP - A - 60 112 834 (SUMITOMO DENKI K.K.) 19-06-985**

**PATENT ABSTRACTS OF JAPAN, vol. 9, no. 66 (C-271)[1789], 26th March 1985; & JP - A - 59 199 774 (DAIKIN K.K.) 12-11-1984**

(73) Proprietor: **MITSUI TOATSU CHEMICALS INC.**
**No. 2-5, Kasumigaseki 3-chome**
**Chiyoda-Ku Tokyo 100(JP)**

(72) Inventor: **Yamaya, Norimasa**
**2882, Iijima-cho Sakae-ku**
**Yokohama-shi Kanagawa-ken(JP)**
Inventor: **Baba, Kenichi**
**2-16-803, Wakabadai Asahi-ku**
**Yokohama-shi Kanagawa-ken(JP)**
Inventor: **Koga, Nobuhito**
**17-7, Ozuki Sakae-ku**
**Yokohama-shi Kanagawa-ken(JP)**

(74) Representative: **Hayward, Denis Edward Peter et al**
**Lloyd Wise, Tregear & Co. Norman House**
**105-109 Strand**
**London WC2R 0AE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 251 741 B1

## Description

The present invention relates to a novel polyimide resin composition having excellent sliding properties.

Polyimides obtained by reacting tetracarboxylic acid dianhydrides with diamines are hereafter expected to be used for a variety of sliding parts because of their various excellent properties and good high-temperature stability as well as outstanding wear resistance.

Many polyimides which have so far been developed exhibit outstanding properties. Even polyimides, however, which have excellent sliding properties and high-temperature stability do not have a definite glass transition temperature. Therefore, it is difficult to process these polyimides by injection molding and special procedures are required for preparing products having desired shapes. On the other hand, polyimide resin having a low glass transition temperature and excellent processability is restricted as regards its use for sliding parts by the upper limit of its application temperature. Thus the performance of polyimide has both merits and drawbacks.

An object of this invention is to provide a novel polyimide resin composition for use as a material for high performance sliding parts. Such sliding parts have excellent high-temperature stability and solvent resistance in addition to the sliding property. Furthermore they can be molded in a variety of shapes by relatively simple injection molding technology.

The object of this invention is, more specifically, to provide a polyimide resin composition having an extraordinarily low coefficient of friction together with outstanding wear resistance and capable of being used for precision machine parts. Machine parts which may be made include, for example, various types of bearing component, piston rings, piston skirts, gears, hoppers, slides, various kinds of pump component, cams, rollers, packings and many types of valve part.

The present inventors have investigated extensively to achieve the above objective. As a consequence, they have found that a polyimide resin composition comprising a novel polyimide and a specific amount of a fluororesin is particularly effective.

Accordingly, the present invention provides a polyimide resin composition which comprises 100 parts by weight of a polyimide having recurring units of the formula:

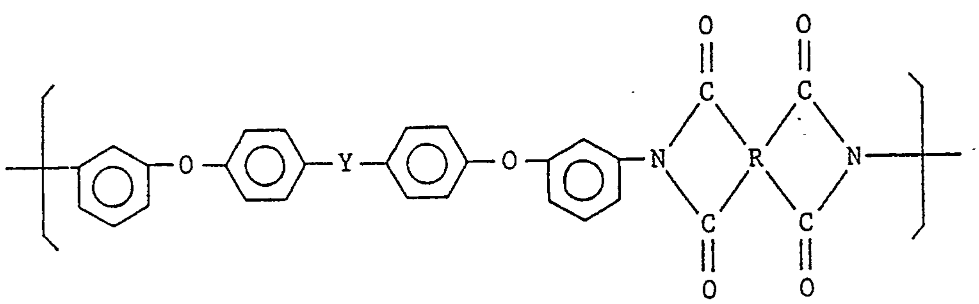

(where Y is a direct bond, or a divalent hydrocarbon radical having from 1 to 10 carbon atoms, a hexafluorinated isopropylidene radical, a carbonyl radical, a thio radical, a sulfinyl radical, a sulfonyl radical or oxygen, and R is a tetra-valent radical selected from aliphatic radicals having 2 or more carbon atoms, alicyclic radicals, monocyclic aromatic radicals, fused polycyclic aromatic radicals, and polycyclic aromatic radicals wherein the aromatic radicals are linked to one another either by a direct bond or via a bridging group);

and from 5 to 100 parts by weight of a fluororesin.

The polyimide resin which can be used in the present invention is a polyimide prepared by reacting an ether-diamine represented by the following formula:

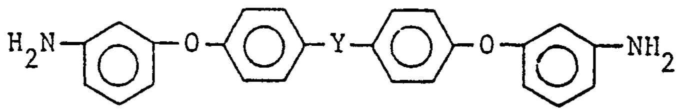

(where Y is a direct bond, or a divalent hydrocarbon radical having from 1 to 10 carbon atoms, a hexafluorinated isopropylidene radical, a carbonyl radical, a thio radical, a sulfinyl radical, a sulfonyl radical or oxygen) with a tetracarboxylic acid dianhydride.

Suitable ether-diamines which can be used include
bis[4-(3-aminophenoxy)phenyl]methane,
1,1-bis[4-(3-aminophenoxy)phenyl]ethane,
1,2-bis[4-(3-aminophenoxy)phenyl]ethane,
2,2-bis[4-(3-aminophenoxy)phenyl]propane,
2,2-bis[4-(3-aminophenoxy)phenyl]butane,
2,2-bis[4-(3-amino-phenoxy)phenyl]-1,1,1,3,3,3-hexafluoropropane, 4,4'-bis(3-aminophenoxy)biphenyl,
bis[4-(3-aminophenoxy)phenyl]ketone,
bis[4-(3-aminophenoxy)phenyl]sulfide,
bis[4-(3-aminophenoxy)phenyl]sulfoxide,
bis[4-(3-aminophenoxy)phenyl]sulfone and
bis[4-(3-aminophenoxy)phenyl]ether.

Representative diamines which can be particularly preferred in the present invention include 2,2-bis[4-(3-aminophenoxy)phenyl]propane, 4,4'-bis(3-aminophenoxy)biphenyl and bis[4-(3-aminophenoxy)phenyl]-sulfide. These ether-diamines may be used alone or in mixtures of two or more.

Tetracarboxylic dianhydrides for use in the method of this invention have the following formula:

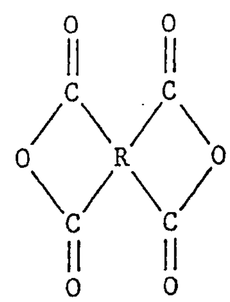

(where R is a tetra-valent radical selected from aliphatic radicals having not less than two carbons, cycloaliphatic radicals, monocyclic aromatic radicals, fused polycyclic aromatic radicals, and polycyclic aromatic radicals wherein the aromatic radicals are linked to one another either by a direct bond or via a bridging group).

Illustrative dianhydrides which can be used in the method include, for example, ethylenetetracarboxylic dianhydride, cyclopentanetetracarboxylic dianhydride, pyromellitic dianhydride, 3,3',4,4'-benzophenonetetracarboxylic dianhydride, 2,2',3,3'-benzophenonetetracarboxylic dianhydride, 3,3',4,4'-biphenyltetracarboxylic dianhydride, 2,2',3,3'-biphenyltetracarboxylic dianhydride, 2,2-bis)3,4-dicarboxyphenyl)-propane dianhydride, 2,2-bis(2,3-dicarboxyphenyl)propane dianhydride, bis(3,4-dicarboxyphenyl) ether dianhydride, bis(3,4-dicarboxyphenyl) sulfone dianhydride, 1,1-bis(2,3-dicarboxyphenyl)ethane dianhydride, bis-(2,3-dicarboxyphenyl)methane dianhydride, bis(3,4-dicarboxyphenyl)methane dianhydride, 2,3,6,7-naphthalenetetracarboxylic dianhydride, 1,4,5,8-naphthalenetetracarboxylic dianhydride, 1,2,5,6-naphthalenetetracarboxylic dianhydride, 1,2,3,4-benzenetetracarboxylic dianhydride, 3,4,9,10-perylenetetracarboxylic dianhydride, 2,3,6,7-anthracenetetracarboxylic dianhydride and 1,2,7,8-phenanthrenetetracarboxylic dianhydride.

Representative dianhydrides which can be particularly preferred in this invention include pyromellitic dianhydride, 3,3',4,4'-benzophenonetetracarboxylic dianhydride, 3,3',4,4'-biphenyltetracarboxylic dianhydride, 2,2-bis(3,4-dicarboxyphenyl)propane dianhydride, bis(3,4-dicarboxyphenyl)ether dianhydride, and bis (3,4-dicarboxyphenyl) sulfone dianhydride.

These tetracarboxylic dianhydrides may be used alone or in mixtures of two or more.

The ether-diamine and the tetracarboxylic dianhydride are reacted by a known method to give a polyamic acid represented by the following formula:

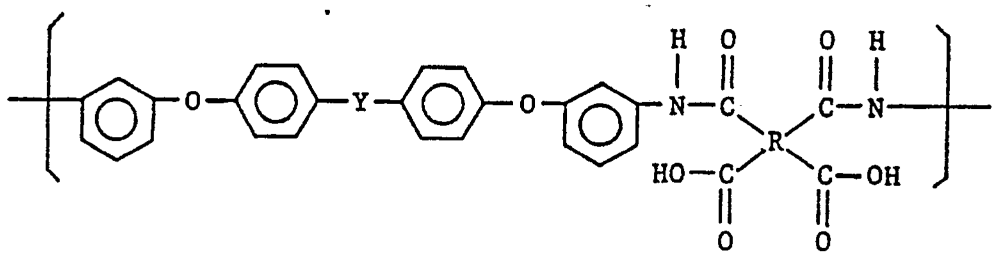

(where Y is a direct bond, or a divalent hydrocarbon radical having from 1 to 10 carbon atoms, a hexafluorinated isopropylidene radical, a carbonyl radical, a thio radical, a sulfinyl radical, a sulfonyl radical or oxygen, and R is a tetra-valent radical selected from aliphatic radicals, having 2 or more carbon atoms, alicyclic radicals, monocyclic aromatic radicals, fused polycyclic aromatic radicals, and polycyclic aromatic radicals wherein the aromatic radicals are linked to one another either by a direct bond or via a bridging group);
and the polyamic acid is successively subjected to dehydration and ring-closing reaction to obtain polyimide.

The term fluororesin as used herein means synthetic high polymers containing fluorine atoms in the molecule. When compared with other synthetic resins, the fluororesin excels in high-temperature stability, chemical resistance and electrical properties (high-frequency properties in particular), and provides a specific low friction property and non-tackiness.

Representative fluororesins which can be used in the present invention are those having the following rational formulas; and at least one of the resins is used.

The fluororesins include, for example,

(1) $\{CF_2CF_2\}_n$ : Polytetrafluoroethylene (PTFE)
(2) $\{CF_2CF_2\}_n\{CF(CF_3)CF_2\}_p$ : Tetrafluroethylene hexafluoropropylene copolymer (FEP),
(3) $\{CF_2CF_2\}_n\{CF(OC_mH_{2m+1})CF_2\}_p$ : Tetrafluoroethylene perfluoroalkylvinylether copolymer (PEA),
(4) $\{CH_2CH_2\}_n\{CF_2CF_2\}_p$ : Ethylene tetrafluoroethylene copolymer (ETFE),
(5) $\{CH_2CH_2\}_n\{CFClCF_2\}_p$ : Ethylene chlorotrifluoroethylene copolymer (ECTFE) and
(6) $\{CF_2CH_2\}_n$ : Polyvinylidene fluoride (PVDF).

Polytetrafluoroethylene (PTFE) is used most preferably among the fluororesins in this invention. The polytetrafluoroethylenes which are commercially available include, for example, TEFLON KPL-610 (a trade mark of Du Pont · Mitsui Fluoro Chemicals Co., Ltd.) The fluororesin for use in this invention is usually in powder form and its grain size is in the range of about 1 to about 25 microns, preferably about 5 to about 10 microns.

The fluororesin in this invention is contained in an amount of from 5 to 100 parts by weight, preferably from 10 to 60 parts by weight per 100 parts by weight of the polyimide. When the content is less than the above-mentioned range, the composition does not have the desired properties. On the other hand, when the content exceeds this range, the composition is hardly further improved in its properties but rather is there a detrimental effect on the wear resistance and mechanical strength of sliding parts made from the composition.

The polyimide composition in the practice of this invention can be prepared by the usually known methods and preferably by the following methods in particular.

(1) The polyimide powder and the fluororesin are premixed by using a mortar, Henschel mixer, drum blender, tumbler blender, ball mill, ribbon blender etc. The resultant mixture is then kneaded by a known fusion mixer or hot roll to form pellets or powder.

(2) The polyimide powder is pre-dissolved or suspended in an organic solvent. The fluororesin is added to the resulting solution or suspension and uniformly dispersed. Then the solvent is removed by heating in a hot air oven. The residual mass is pelletized or powdered.

The organic solvents used in this method include, for example, N,N-dimethylformamide, N,N-dimethylacetamide, N,N-diethylacetamide, N,N-dimethyl-methoxyacetamide, N-methyl-2-pyrrolidone, 1,3-dimethyl-2-imidazolidinone, N-methylcaprolactam, 1,2-dimethoxyethane, bis(2-methoxyethyl)ether, 1,2-bis(2-methoxyethoxy)ethane, bis[2-(2-methoxyethoxy)ethyl] ether, tetrahydrofuran, 1,3-dioxane, 1,4-dioxane, pyridine, picoline, dimethyl sulfoxide, dimethyl sulfone, tetramethylurea, hexamethylphosphoramide, m-cresol, p-chlorophenol and anisole. There solvents can be used alone or in mixtures of two or more.

(3) The polyamic acid precursor of the polyimide is dissolved in the aforesaid organic solvent. The fluororesin is suspended in the resultant solution, followed by imidization by subjecting to a heat treatment

at a temperature of from 100 to 400°C or a chemical imidization with a known imidizing agent. The solvent is then removed and the residue is pelletized or powdered.

The polyimide resin composition of this invention may also have added to it at least one solid lubricant. Suitable solid lubricants which may be used include, for example, molybdenum disulfide, graphite, boron nitride, lead monoxide and lead powder.

In addition, one or more reinforcing materials may be added. Representative reinforcing materials which may be added include, for example, glass fibre, carbon fibre, aromatic polyamide fibre, potassium titanate fibre, and glass beads.

Furthermore, the composition of this invention may have added one or more known additives in a range such that the objective of this invention is still attained. Illustrative additives include antioxidants, heat stabilizers, ultra violet absorbers, flame retardants, auxiliary flame retardants, antistatic agents, lubricants, and colorants.

In practical applications, the polyimide resin composition of this invention may be molded by known processing methods such as injection molding, extrusion molding, rotation molding etc.

## EXAMPLES

The present invention will be hereinafter illustrated by examples of synthesis of the diamines, followed by examples of production of the polyimide/fluororesin product and some comparative examples of compositions outside the scope of the invention.

### Synthesis example 1

A 3 l glass reaction vessel was charged with 186 grams (1.0 mol) of 4,4'-dihydroxybiphenyl, 438 grams (2.6 mols) of m-dinitrobenzene, 363 grams of potassium carbonate and 2,000 ml of N,N-dimethylformamide. The mixture was reacted at a temperature of 145-150°C for 16 hours. After completing the reaction, the resultant mixture was cooled and filtered to remove potassium nitrite. The solvent was distilled off from the filtrate under reduced pressure. The residue was cooled to 65°C, 2,000 ml of methanol were added and the mixture stirred for an hour. The resulting crystals were filtered, washed with water, washed with methanol and dried to obtain 426 grams (99.5% yield) of 4,4'-bis(3-nitrophenoxy)biphenyl as brown crystals.

In the next step, a 1 l glass reaction vessel was charged with 100 grams (0.23 mol) of crude 4,4'-bis)3-nitrophenoxy)biphenyl, 10 grams of active carbon, 1 gram of ferric chloride hexahydrate and 500 ml of 2-methoxyethanol. The mixture was stirred for 30 minutes under reflux and then 46 grams (0.92 mol) of hydrazine hydrate were added dropwise during 3 hours at 70-80°C. The reaction was terminated by stirring for 5 hours at 70-80°C after ending the dropwise addition. The reaction mixture was cooled, filtered to remove the catalyst and poured into 500 ml of water. The separated crystals were filtered, 48 grams of 35% hydrochloric acid and 540 ml of 50% isopropyl alcohol were added and the mixture warmed. The solution thus obtained was allowed to cool. The separated 4,4'-bis(3-aminophenoxy)biphenyl hydrochloride was filtered, 540 ml of 50% isopropyl alcohol were added and the mixture warmed. The solution thus obtained had added to it 5 grams of active carbon, and was then filtered and neutralized with aqueous ammonia. The separated crystals were filtered, washed with water and dried to give 72.0 grams (85% yield) of 4,4'-bis(3-aminophenoxy)biphenyl as colorless crystals having a melting point of 144-146°C. The purity was 99.6% according to high-speed liquid chromatography.

Elemental analysis: $C_{24}H_{20}N_2O_2$

| | C | H | N |
|---|---|---|---|
| Calculated (%) | 78.26 | 5.43 | 7.61 |
| Found (%) | 78.56 | 5.21 | 7.66 |

MS : 368 ($M^+$) , 340, 184

IR (KBr, $cm^{-1}$) : 3400 and 3310 (amino group)

1240 (ether linkage)

Synthesis example 2

A 1 l glass reaction vessel was charged with 85.6 grams (0.375 mol) of 2,2-bis(4-hydroxyphenyl)-propane, 151.2 grams (0.9 mol) of m-dinitrobenzene, 124.6 grams of potassium carbonate and 660 ml of N,N-dimethyl formamide. The mixture was reacted for 10 hours at a temperature of 145-150°C. After completing the reaction, the resultant mixture was cooled and filtered to remove potassium nitrite. The solvent was distilled off from the filtrate under reduced pressure. The residue was cooled to 65°C, 450 ml of methanol were added and the mixture stirred for an hour. The resulting crystals were filtered, washed with water, washed with methanol, and dried to obtain 164.8 grams (93.5% yield) of 2,2-bis[4-(3-nitrophenoxy)phenyl]propane as brown crystals.

In the next step, a 500 ml glass reaction vessel was charged with 100 grams (0.21 mol) of 2,2-bis[4-(3-nitrophenoxy)phenyl]propane, 10 grams of active carbon, 1 gram of ferric chloride hexahydrate and 300 ml of 2-methoxyethanol. The mixture was stirred for 30 minutes under reflux and then 42 grams (0.84 mol) of hydrazine hydrate were added dropwise during 2 hours at 70-80°C. The reaction mixture was further stirred for 5 hours at 70-80°C, cooled, filtered to remove the catalyst, and 150 ml of 2-methoxyethanol was distilled off. The residue thus obtained had added to it 270 grams of 20% aqueous hydrochloric acid solution and also 30 grams of sodium chloride, and was then cooled to 20-25°C with stirring. The separated crystals were filtered and neutralized in 30% isopropyl alcohol with aqueous ammonia. The separated crystals were filtered, washed with water, dried and recrystallized from a solvent mixture of benzene and n-hexane.

Thus 2,2-bis[4-(3-aminophenoxy)phenyl]propane was obtained in amount 69.2 grams (75% yield) in the form of colorless crystals having a melting point of 106-108°C. The purity was 99. 6% according to high-speed liquid chromatography.

Elemental analysis: $C_{24}H_{20}N_2O_2$

| | C | H | N |
|---|---|---|---|
| Calculated (%) | 79.02 | 6.34 | 6.83 |
| Found (%) | 79.21 | 6.40 | 6.71 |

MS : 470 ($M^+$) , 455 $(M-CH_3)^+$

IR (KBr, $cm^{-1}$) : 3460 and 3370 (amino group)

1220 (ether linkage)

Synthesis example 3

A 3 l glass reaction vessel was charged with 218 grams (1 mol) of bis(4-hydroxyphenol) sulfide, 403 grams (2.4 mols) of m-dinitrobenzene, 331 grams (2.0 mols) of potassium carbonate and 2.5 l of N,N-dimethylformamide. The mixture was reacted for 20 hours at a temperature of 145-150 °C. After completing the reaction, the resultant mixture was cooled and filtered and the solvent was distilled from the filtrate under reduced pressure. The residue thus obtained had added to it 800 ml of methanol and was stirred for an hour. The crystals obtained were filtered, washed with methanol and dried to give 429 grams (92.3% yield) of bis[4-(3-nitrophenoxy)phenyl] sulfide as crystals.

In the next step, 428 grams (0.93 mol) of the crude intermediate was charged into a 3 l glass reaction vessel and 22.6 grams of active carbon, 0.9 gram of ferric chloride hexahydrate and 1.5 l of 2-methoxyethanol were added. The mixture was stirred for 30 minutes under reflux, and then 155.2 grams (3.1 mols) of hydrazine hydrate were added dropwise during 2 hours at 110-115 °C. The resultant mixture was further stirred for 3.5 hours under reflux, cooled and filtered to remove the catalyst. The filtrate was concentrated under reduced pressure and 205 ml of 35% hydrochloric acid, 1120 ml of water and 480 ml of isopropyl alcohol were added. The mixture was warmed to obtain a solution, 20 grams of active carbon were added and the mixture was then hot filtered. The filtrate then had added to it 112 grams of sodium chloride, after which it was cooled and the hydrochloride crystals that separated were filtered off. The hydrochloride crystals were neutralized with aqueous ammonia by a known procedure to obtain 265 grams (66% yield) of the desired bis[4-(3-aminophenoxy)phenyl] sulfide as colorless crystals having a melting point of 112.4-113.4 °C (corr). The purity was higher than 99.9%.

Elemental analysis: $C_{24}H_{20}N_2O_2S$

| | C | H | N | S |
|---|---|---|---|---|
| Calculated (%) | 71.97 | 5.03 | 7.00 | 8.01 |
| Found (%) | 71.90 | 4.54 | 6.92 | 7.72 |

MS (FD) : 470 ($M^+$)

IR (KBr, $cm^{-1}$) : 3390 and 3300 (amino group)

1220 (ether linkage)

Product Examples 1-4

A reaction vessel equipped with a stirrer, reflux condenser and nitrogen inlet tube was charged with 36.8 kilograms (100 mols) of 4,4'-bis(3-aminophenoxy)biphenyl and 175.8 kilograms of N,N-dimethylacetamide. The mixture had added to it 21.8 kilograms (100 mols) of pyromellitic dianhydride portion by portion at room temperature under a nitrogen atmosphere with care taken to prevent temperature rise of the mixture, and was then stirred for 20 hours at room temperature. The polyamic acid thus obtained had an inherent viscosity of 2.47 dl/g.

In the next step, 150 kilograms of the above polyamic acid solution had added to it 337.5 kilograms of N,N-dimethylacetamide, the mixture was warmed to 70°C with stirring under a nitrogen atmosphere, and 26.1 kilograms (26 mols) of acetic anhydride and 9.50 kilograms (9 mols) of triethylamine were added dropwise. Yellow polyimide powder started to separate about 10 minutes after terminating the dropwise addition, and the mixture was further stirred for 2 hours with warming, and then hot filtered. The polyimide powder thus obtained was washed with methanol and dried at 150°C for 5 hours under reduced pressure to afford 34.5 kilograms (98% yield) of polyimide powder.

To 100 parts by weight of the polyimide powder above obtained, fluororesin (commercially available TEFLON KPL-610, a trade mark of Du Pont · Mitsui Fluoro Chemicals Co., Ltd.) was added in the various amounts given for Examples 1-4 in Table 1 and in each case mixed in a Henschel mixer (from Kawada Seisakusho). The resultant mixture was kneaded in a molten state at a temperature of 380°C in a single screw extruder having a 30 mm aperture. The strands thus obtained were air-cooled and cut into pellets.

The pellets obtained were injection molded with an Arburg injection molding machine having a maximum mold clamping force of 35 tons (35.56 tonnes) under the conditions; injection pressure of 500 $kg/cm^2$, cylinder temperature of 400°C, and mold temperature of 180°C. Specimens for measuring the sliding properties were thus prepared. As to the sliding properties, friction coefficient and wear coefficient were measured and the results obtained are given in Table 1.

The friction coefficient was measured by rubbing against stainless steel 45C under a sliding load of 10 $kg/cm^2$ with a sliding velocity of 6 m/min. The wear coefficient was measured by rubbing against stainless steel 45C under a sliding load of 5 $kg/cm^2$ with a sliding velocity of 100 m/min.

Product Example 5

To 100 parts by weight of the polyimide powder obtained by the same procedure as in Product Examples 1 to 4, 150 parts by weight of N,N-dimethylacetamide were added to make a suspension. The suspension further had added to it 30 parts by weight of fluororesin having an average diameter of 10 microns (TEFLON KPL-610) which was uniformly dispersed in the mixture. After preliminary drying of the resultant mixture in a hot air oven at 200°C for 20 hours, it was further dried in a vacuum desiccator at 150°C for 5 hours under reduced pressure in order to completely remove the N,N-dimethylacetamide

solvent. The powder mixture thus obtained was pelletized by the same procedure as in Product examples 1 to 4 and used to make specimens for testing the physical properties. The physical properties were tested by the same procedure as in Product Examples 1 to 4 and the results are given in Table 1.

Product Example 6

To 400 parts by weight of the polyamic acid solution obtained by the same procedure as in Product Examples 1 to 4, 30 parts by weight of the fluororesin used in Product Examples 1 to 4 (TEFLON KPL-610) were added and uniformly dispersed. The resultant mixture was heated and dried by the same procedure as in Product Example 5 to obtain a powder mixture. Then the procedure of Product Example 5 was repeated with the powder mixture to obtain test results which are given in Table 1.

Product Examples 7-9

To 100 parts by weight of each of the polyimide powders derived from the diamines and the tetracarboxylic acid dianhydrides which are given for these Examples in Table 1, 30 parts by weight of the fluororesin used in Product Examples 1 to 4 (TEFLON KPL-610) was added. The same further procedures as in Product Examples 1 to 4 were then carried out in each case to obtain the test results as given in Table 1.

Product Examples 10-18

To 100 parts by weight of the polyimide powder of Product Examples 1 to 4, 10 parts by weight of the fluororesin used in Product Examples 1 to 4 (TEFLON KPL-610) were added. Separate quantities of this mixture then had added to them, respectively, the solid lubricants or reinforcing materials listed for these Examples in Table 1, in the amounts given in Table 1. The solid lubricants included lead powder, graphite, boron nitride and molybdenum sulfide, having a grain size of 200 to 300 mesh. The reinforcing materials were silane-treated glass fibre having a 3 mm fibre length and a 13 micron fibre diameter (Trade Mark; CS-3PE-476S; from Nitto Boseki Co.), carbon fibre having a 3 mm fibre length and a 12 micron fibre diameter (Trade Mark; TORAYCO, from Toray Industries), aromatic polyamide fibre having a 3 mm fibre length (Trade Mark; KEVLAR, from E.I.Du Pont de Nemours & Co.), and potassium titanate fibre having a 20 micron average fibre length and a 0.2 micron sectional diameter (Trade Mark; TISMO-D from Ohtsuka Chemicals Co.). The resultant compositions were then individually treated and tested by the same procedure as in Product Examples 1 to 4. The test results obtained are given in Table 1.

Comparative Examples 1-3

To 100 parts by weight of the polyimide powder of Product Examples 1 to 4, the fluororesin used in Product Examples 1 to 4 (TEFLON; KPL-610) was added in the amounts given in Table 1 for these Comparative Examples. In the case of Comparative Example 1 it will be seen that none was added.

The same procedures as in Examples 1 to 4 were then carried out to obtain the test results as given in Table 1.

Table 1 (1)

| | Composition (parts by weight) | | | | | Friction coefficient | Wear coefficient |
|---|---|---|---|---|---|---|---|
| | Polyimide 100 | | Fluoro-resin | Solid lubricant | Reinforcing material | | $\times 10^{-8} \frac{cm^3 . min}{kg.m.hr}$ |
| | Diamine | Tetracarboxylic acid dianhydride | | | | | |
| Example 1 | 4,4'-Bis(3-amino-phenoxy)biphenyl | Pyromellitic dianhydride | 10 | - | - | 0.22 | 86 |
| Example 2 | " | " | 30 | - | - | 0.18 | 91 |
| Example 3 | " | " | 50 | - | - | 0.16 | 120 |
| Example 4 | " | " | 80 | - | - | 0.14 | 125 |
| Example 5 | " | " | 30 | - | - | 0.18 | 87 |
| Example 6 | " | " | 30 | - | - | 0.18 | 89 |

Table 1 (2)

| | Composition (parts by weight) | | | | | Friction coefficient | Wear coefficient |
|---|---|---|---|---|---|---|---|
| | Polyimide 100 | | Fluoro-resin | Solid lubricant | Reinforcing material | | $\times 10^{-8}$ $\frac{cm^3.min}{kg.m.hr}$ |
| | Diamine | Tetracarboxylic acid dianhydride | | | | | |
| Example 7 | 2,2-Bis[4-(3-amino-phenoxy)phenyl]propane | 3,3',4,4'-Benzophenone-tetracarboxylic dianhydride | 30 | - | - | 0.17 | 86 |
| Example 8 | Bis[4-(3-aminophenoxy)phenyl]sulfide | Pyromellitic dianhydride | 30 | - | - | 0.18 | 88 |
| Example 9 | " | " | 30 | - | - | 0.17 | 89 |
| Example 10 | 4,4'-Bis(3-amino phenoxy)biphenyl | " | 10 | Lead monoxide 7 | - | 0.16 | 76 |
| Example 11 | " | " | 10 | Lead 7 | - | 0.14 | 68 |
| Example 12 | " | " | 10 | Graphite 10 | - | 0.14 | 65 |

Table 1 (3)

| | Composition (parts by weight) | | | | | Friction coefficient | Wear coefficient |
|---|---|---|---|---|---|---|---|
| | Polyimide 100 | | Fluoro-resin | Solid lubricant | Reinforcing material | | $\times 10^{-8}$ $\frac{cm^3.min}{kg.m.hr}$ |
| | Diamine | Tetracarboxylic acid dianhydride | | | | | |
| Example 13 | 4,4'-Bis(3-amino phenoxy)biphenyl | Pyromellitic dianhydride | 10 | Boron nitride 7 | - | 0.15 | 65 |
| Example 14 | " | " | 10 | Molybdenum disulfide 7 | - | 0.16 | 62 |
| Example 15 | " | " | 10 | - | Glass fibre 20 | 0.23 | 50 |
| Example 16 | " | " | 10 | - | Carbon fibre 20 | 0.20 | 32 |
| Example 17 | " | " | 10 | - | Aromatic polyamide fibre 20 | 0.18 | 32 |
| Example 18 | " | " | 10 | - | Potassium titanate fibre 20 | 0.18 | 31 |

Table 1 (4)

| | Composition (parts by weight) | | | | | Friction coefficient | Wear coefficient |
|---|---|---|---|---|---|---|---|
| | Polyimide 100 | | Fluoro-resin | Solid lubricant | Reinforcing material | | $\times 10^{-8}$ $\frac{cm^3.min}{kg.m.hr}$ |
| | Diamine | Tetracarboxylic acid dianhydride | | | | | |
| Comparat. Example 1 | 4,4'-bis(3-amino phenoxy)biphenyl | Pyromellitic dianhydride | 0 | - | - | 0.46 | 450 |
| Comparat. Example 2 | " | " | 3 | - | - | 0.44 | 450 |
| Comparat. Example 3 | " | " | 120 | - | - | 0.12 | 3650 |

## Claims

1. A polyimide resin composition which comprises 100 parts by weight of a polyimide having recurring units of the formula:

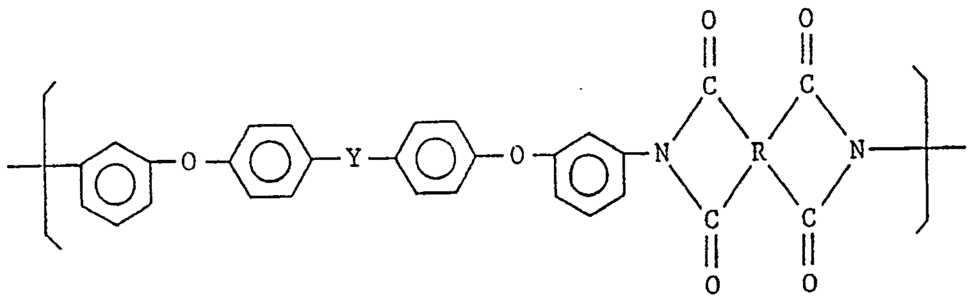

(where Y is a direct bond, or a divalent hydrocarbon radical having from 1 to 10 carbon atoms, a hexafluorinated isopropylidene radical, a carbonyl radical, a thio radical, a sulfinyl radical, a sulfonyl radical or oxygen, and R is a tetra-valent radical selected from aliphatic radicals having 2 or more carbon atoms, alicyclic radicals, monocyclic aromatic radicals, fused polycyclic aromatic radicals, and polycyclic aromatic radicals wherein the aromatic radicals are linked to one another either by a direct bond or via a bridging group);

and from 5 to 100 parts by weight of a fluororesin.

**2.** The polyimide resin composition as claimed in claim 1, wherein Y is a direct bond, an isopropylidene radical or a thio radical.

**3.** The polyimide resin composition as claimed in claim 1, wherein Y is a direct bond.

**4.** The polyimide resin composition as claimed in claim 1, wherein Y is an isopropylidene radical.

**5.** The polyimide resin composition as claimed in claim 1, wherein Y is a thio radical.

**6.** The polyimide resin composition as claimed in any of claims 1 to 5, wherein R is a tetra-valent radical selected from

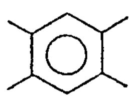 , 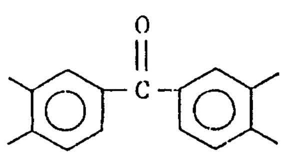 , 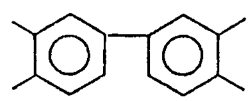 ,

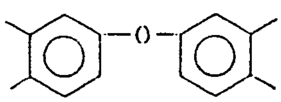 , 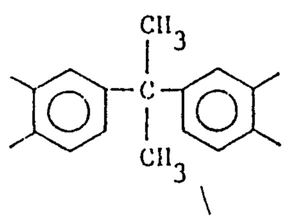 and 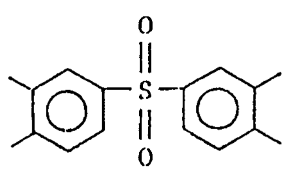 .

**7.** The polyimide resin composition as claimed in any of claims 1 to 5, wherein R is a tetravalent radical of the form

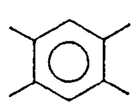 .

8. The polyimide resin composition as claimed in any of claims 1 to 5, wherein R is a tetra-valent radical of the form

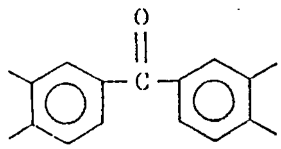

9. The polyimide resin composition as claimed in any preceding claim, wherein the fluororesin is selected from polytetrafluoroethylene, tetrafluoroethylene hexafluoropropylene copolymer, tetrafluoroethylene perfluoroalkylvinylether copolymer, ethylene tetrafluoroethylene copolymer, ethylene chlorotrifluoroethylene copolymer and polyvinylidene fluoride.

10. The polyimide resin composition as claimed in any of claims 1 to 8, wherein the fluororesin is polytetrafluoroethylene.

## Revendications

1. Composition de résine polyimide comprenant 100 parties en poids d'un polyimide ayant des groupes répétitifs de formule :

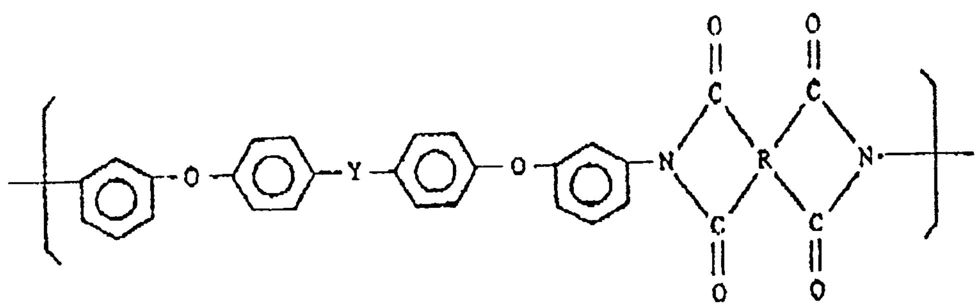

(où Y est une liaison directe ou un radical hydrocarbone divalent ayant de 1 à 10 atomes de carbone, un radical isopropilidène hexafluoré, un radical carbonyl, un radical thio, un radical sulfinyl, un radical sulfonyl ou un oxygène, et R est un radical tétravalent choisi parmis les radicaux aliphatiques ayant au moins 2 atomes de carbone, les radicaux alicycliques, le radicaux aromatiques monocycliques, les radicaux aromatiques polycycliques condensés et les radicaux aromatiques polycycliques dans lesquels les radicaux aromatiques sont liés entre eux soit par une liaison directe soit par l'intermédiaire d'un groupe formant un pont) :

et de 5 à 100 parties en poids d'une résine fluorée.

2. La composition de résine polyimide selon la revendication 1, dans laquelle Y est une liaison directe, un radical isopropylidène, ou un les radical thio.

3. La composition de résine polyimide selon la revendication 1, dans laquelle Y est une liaison directe.

4. La composition de résine polyimide selon la revendication 1, dans laquelle Y est un radical isopropylidène.

5. La composition de résine polyimide selon la revendication 1, dans laquelle Y est un radical thio.

6. La composition de résine polyimide selon l'une quelconque des revendications 1 à 5, dans laquelle R

est un radical tétravalent choisi parmi :

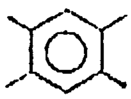 , 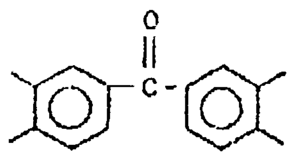 , 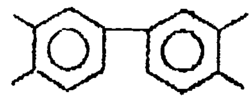 ,

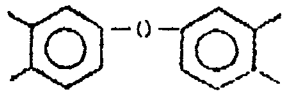 , 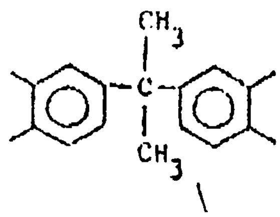 et 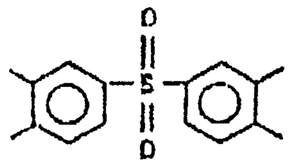 .

7. La composition de résine polyimide selon l'une quelconque des revendications 1 à 5, dans laquelle R est un radical de la forme :

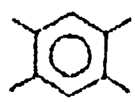 .

8. La composition de résine polyimide selon l'une quelconque des revendications 1 à 5, dans laquelle R est un radical de la forme :

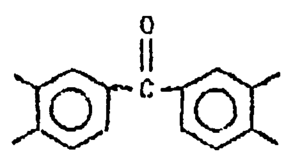 .

9. La composition de résine polyimide selon l'une quelconque des revendications précédentes, dans laquelle la résine fluorée est choisie parmi le polytétrafluoroéthylène, le copolimère tétrafluoroéthylène hexafluoropropylène, le copolimère éthylène tétrafluoroéthylène, le copolimère éthylène chlorotrifluoroéthylène et le fluorure de polyvinilidène.

10. La composition de résine polyimide selon l'une quelconque des revendications 1 à 8, dans laquelle la résine fluorée est du polytétrafluoroéthylène.

**Patentansprüche**

1. Polyimidharzzubereitung gekennzeichnet durch 100 Gewichtsteile eines Polyimids mit sich wiederholenden Einheiten der Formel:

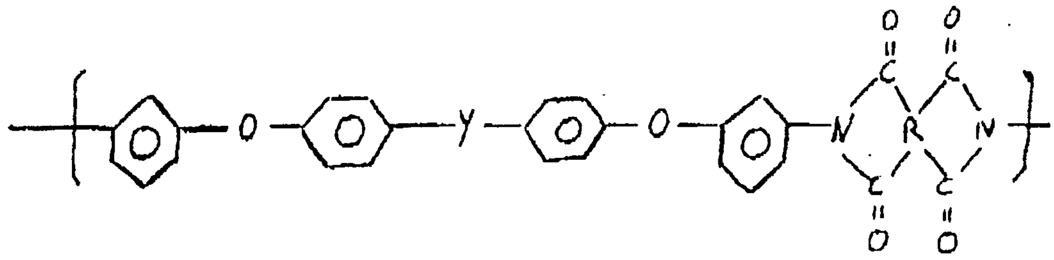

(wobei Y eine Direktbindung oder ein Zweiwertiges Kohlenwasserstoffradikal mit 1 bis 10 Kohlanstoffatomen,ein hexafluoriniertes Isopropylidenradikal,ein Carbonylradikal,ein Thioradikal,ein Sulfinylradikal,ein Sulfonylradikal oder Sauerstoff ist und R ein vierwertiges Radikal ausgewählt aus aliphatischen Radikalen mit 2 oder mehr Kohlenstoffatomen,alicyclischen Radikalen,monocyclischen aromatischen Radikalen ,geschmolzenen polycyclischen aromatischen Radikalen und polycyclischen aromatischen Radikalen ist,wobei die aromatischen Radikale miteinander entweder durch Direktbindung oder über eine Brückengruppe verbunden sind) und durch 5 bis 100 Gewichtsteile eines Fluorharzes.

2. Polyimidharzzubereitung nach Anspruch 1,dadurch gekennzeichnet,daß Y eine Direktbindung,ein Isopropylidenradikal oder ein Thioradikal ist.

3. Polyimidharzzubereitung nach Anspruch 1,dadurch gekennzeichnet,daß Y eine Direktbindung ist.

4. Polyimidharzzubereitung nach Anspruch 1,dadurch gekennzeichnet,daß Y ein Isopropylidenradikal ist.

5. Polyimidharzzubereitung nach Anspruch 1,dadurch gekennzeichnet,daß Y ein Thioradikal ist.

6. Polyimidharzzubereitung nach einem der Ansprüche 1 bis 5,dadurch gekennzeichnet,daß R ein vierwertiges Radikal ausgewählt aus

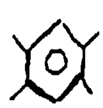 , 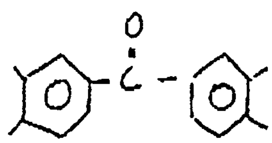 , 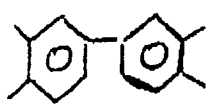 ,

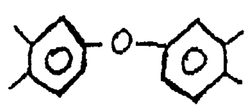 , 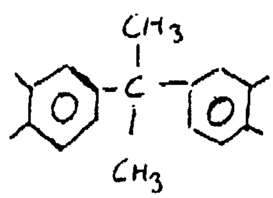 und 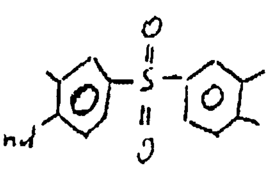

ist.

7. Polyimidharzzubereitung nach einem der Ansprüche 1 bis 5, dadurch gekennzeichnet,daß R ein vierwertiges Radikal der Form

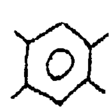

ist.

8. Polyimidharzzubereitung nach einem der Ansprüche 1 bis 5,dadurch gekennzeichnet,daß R ein vierwer-

tiges Radikal der Form

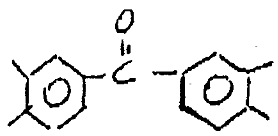

ist.

**9.** Polyimidharzzubereitung nach einem der vorstehenden Ansprüche,dadurch gekennzeichnet,daß das Fluorharz ausgewählt ist aus Polytetrafluoräthylen,Tetrafluoräthylen hexafluorpropylen Copolymer,Tetrafluoräthylen perfluoralkylvinyläther Copolymer,Äthylen tetrafluoräthylen Copolymer,Äthylen Chlortrifluoräthylen Copolymer und Polyvinylidenfluorid.

**10.** Polyimidharzzubereitung nach einem der Ansprüche 1 bis 8,dadurch gekennzeichnet,daß das Fluorharz Polytetrafluoräthylen ist.